# EUROPEAN PATENT SPECIFICATION

(11) **EP 0 244 580 B1**
(45) Date of publication and mention of the grant of the patent: **14.04.1993**
(21) Application number: 87102698.5
(22) Date of filing: 25.02.1987
(51) Int. Cl.: H05B 6/10

(54) **Apparatus for inductive heating**
Induktionsheizeinrichtung
Appareil de chauffage par induction

(30) Priority: 03.03.1986 SE 8600940
(43) Date of publication of application: 11.11.1987
(73) Proprietor: ASEA AB, S-721 83 Västeras (SE)
(72) Inventor: Andersson, Lars, S-722 43 Västeras (SE); Klimt, Zdenek, S-722 42 Västeras (SE)
(74) Representative: Boecker, Joachim, Dr.-Ing.

(56) References cited:
- US-A- 3 731 040

## Description

The invention relates to an assembly for heating the edge portions of a flat product according to the precharacterising part of Claim 1. Such an assembly is known from the EP-A-0 183 209.

A similar assembly is described in the EP-A-85 11 4886, the heater(s) constituting one or more bent, flat spiral coil(s), arranged so that the outermost parts of the edges will pass a greater portion of the coil than parts located further from the edges, the outer edge thus being heated more than the inner parts of the product. This results in keeping the outer edges at a temperature corresponding approximately to that of the rest of the product, for example a billet, sheet, or strip.

The inductive heaters are arranged to surround the flat product, such as a billet on its way to a rolling mill, on three sides and are suitably arranged to be supplied with a single-phase current of mains frequency or high frequency in the range of 1000-3000 Hz.

In processes where flat products are to be kept hot along the production line, the products cool more quickly at the edges than in their remaining sections. Often the heating assembly described above is sufficient. However, as is also apparent from a study of temperatures from calculated temperature distribution for slabs or other flat products, sometimes a more complete compensation for the loss of heat at the edges is required.

The invention aims at an assembly for heating the edge portions of a flat product of the above-mentioned kind which allows to keep the flat product across its entire cross-section at approximately the same temperature.

To achieve this aim the invention suggests an assembly according to the introductory part of Claim 1, which is characterized by the features of the characterizing part of Claim 1.

Further developments of the invention are characterized by the features of the additional claims.

In a assembly according to the invention a substantially complete temperature and heat-loss compensation will be obtained along the edges of the flat billets to be further worked.

The invention will now be described in greater detail with reference to the accompanying drawings showing - by way of example - in
- Figure 1: the typical temperature conditions in a flat product prior to the application of an assembly according to the invention,
- Figure 2: a heater in an assembly according to the invention with combined coils,
- Figure 3: a side view of the inductive heater in Figure 2 with a side edge of the product,

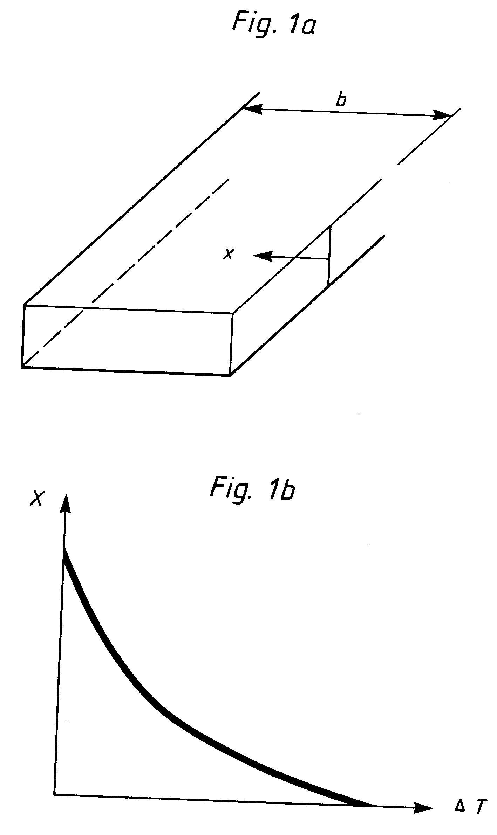

Figure 1 shows typical temperature conditions prior to edge heating. x is the distance from the outer edge of the product and b is the width of the product. Delta T is the difference between the mean temperature at various distances x from the edge and the mean temperature at the centre of the billet. x is smaller than b/2.

The assembly according to the invention is intended to reduce the temperature differences revealed in Figure 1. After transport of a product through the assembly, the energy supplied to the billet will be typically distributed as delta T.

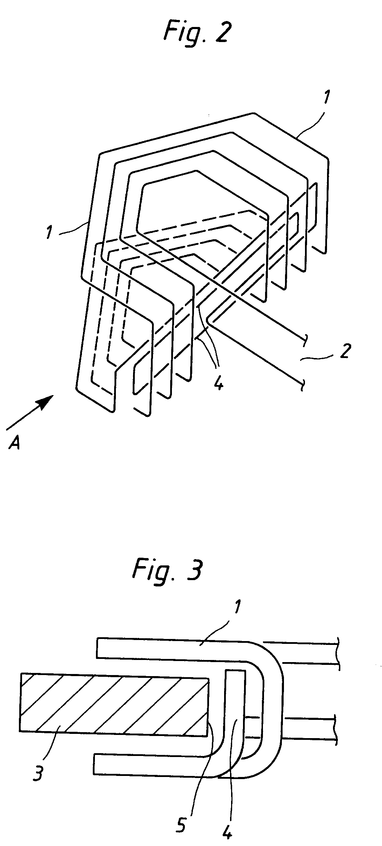

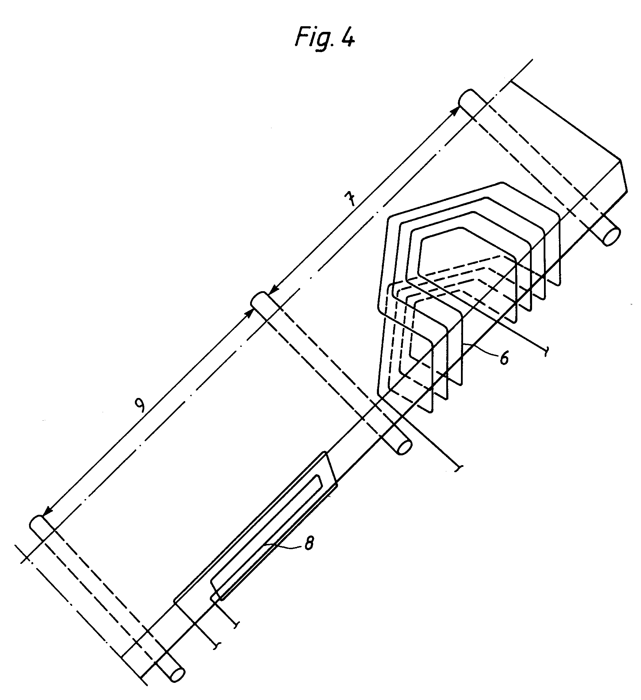

Figure 2 shows a triangular coil 1 designed to surround a side edge of a flat product on three sides. The coil 1 is supplied via its terminals 2 with a current of single phase mains frequency or high frequency in the range 1000-3000 Hz. Figure 3 shows one side edge of a flat billet, such as a slab or the like, which is surrounded in the afore-said manner by the coil 1. The turns of the coil 1 are wound triangularly so that the outermost parts of the side edge 3 pass more turns of the coil than the sections located more distant from the edge (see the above-mentioned EP-A-85114886).

One or more vertical flat coils 4 are arranged in series with or parallel to the coil 1, parallel to the side edge, and this or these coil(s) can be arranged, together with the coils 1, within the same roll gap.

The combination of a triangular coil 1 with a vertical flat coil 4 at the edge sides 5 enables the temperature of the edge and corners to be increased even further.

The combination according to Figure 2 is thus effected so that the triangular coil is placed in the gap between two consecutive rolls of a conveyor belt and that the flat coil 4 is placed in the same gap. The space requirement for the inductive heater in longitudinal direction is thus limited.

The supply sources for the various coils 1,4 may be separate, thus enabling individual variation of the field strength and/or frequency.

The assembly according to the above can be varied in many ways within the scope of the following claims.

## Claims

1. Assembly for heating a side edge portion of a travelling flat product, such as a billet, and comprising a first induction coil, in the form of a flat spiral coil (1) bent into a U-shaped form having horizontal sides which are triangular in shape, spaced apart and positioned to overlie the mutually opposite sides of said flat product, travelling between said horizontal sides of the said first induction coil, **characterized** in that the assembly also includes a second induction coil (4) which is flat in shape and positioned in a vertical plane parallel to the billet's side edge (5), the second coil (4) having a height less than the spacing between the horizontal sides of the first coil and that the second coil is positioned between the horizontal sides of the first coil (1) such as to cooperate with the first coil.

2. Assembly according to claim 1, **characterized** in that the bent, flat spiral coil(s) (1) and the vertical flat coil(s) (4) are combined to form a coil unit located within the same roll-gap (7).

3. Assembly according to claims 2 or 3, **characterized** in that the bent, flat spiral coil(s) (1) and the vertical flat coil(s) are supplied from different power sources, to permit individual variation of the field strength and/or the frequency, for instance.

4. Assembly according to any of the preceding claims, **characterized** in that the bent, flat spiral coil(s) (1) are so shaped that the outermost part of the edges will pass a greater portion of the coil than portions located further from the edges, and that the coils surround the edges on three sides.

## Patentansprüche

1. Einrichtung zum Erhitzen der Kantenseiten eines transportierten flachen Produktes, wie z.B. eines Walzblockes, mit einer ersten Induktionsspule in Form einer flachen Spiralspule (1), die in eine U-Form gebogen ist, die horizontale Seiten hat, die dreieckförmig sind, einen Abstand voneinander haben und so angeordnet sind, daß sie über je einer der einander gegenüberliegenden Seiten des flachen Produktes liegen, welches zwischen den horizontalen Seiten des genannten ersten Induktionsspule hindurchwandert, **dadurch gekennzeichnet**, daß zu der Einrichtung eine zweite Induktionsspule (4) gehört, die eine flache Form hat und in einer vertikalen Ebene parallel zu der Kantenseite (5) des Walzblockes liegt, und daß die zweite Spule (4) eine Höhe hat, die kleiner ist als der Abstand zwischen den horizontalen Seiten der ersten Spule, und daß die zweite Spule zwischen den horizontalen Seiten der ersten Spule (1) derart angeordnet ist, daß sie mit der ersten Spule zusammenarbeitet.

2. Einrichtung nach Anspruch 1 **dadurch gekennzeichnet**, daß die gebogene(n) flache(n) Spiralspule(n) (1) und die vertikale(n) flache(n) Spule(n) (4) zu einer Spuleneinheit vereinigt sind, die in demselben Zwischenraum (7) zwischen benachbarten Rollen angeordnet ist.

3. Einrichtung nach einem der Ansprüche 2 oder 3 **dadurch gekennzeichnet**, daß die gebogene(n) flache(n) Spiralspule(n) (1) und die vertikale(n) flache(n) Spule(n) aus verschiedenen Stromquellen gespeist werden, um eine individuelle Variation von beispielsweise der Feldstärke und/oder der Frequenz zu ermöglichen.

4. Einrichtung nach einem der vorhergehenden Ansprüche, **dadurch gekennzeichnet**, daß die gebogene(n) flache(n) Spiralspule(n) (1) so geformt ist(sind), daß der äußerste Teil der Kanten einen größeren Abschnitt der Spule durchläuft als Abschnitte, die von den Kanten weiter entfernt liegen, und daß die Spulen die Kanten auf drei Seiten umgeben.

## Revendications

1. Appareil pour chauffer une partie de bord latéral d'un produit plat en mouvement, tel qu'une billette et comprenant une première bobine d'induction, se présentant sous la forme d'une bobine en spirale plate (1), courbée pour prendre une forme en U, ayant des côtés horizontaux qui ont une forme triangulaire, qui sont mutuellement espacés et sont positionnés de façon à recouvrir les côtés mutuellement opposés du produit plat, se déplaçant entre les côtés horizontaux de la première bobine d'induction, **caractérisé** en ce que l'appareil comprend également une seconde bobine d'induction (4) qui a une forme plate et qui est positionnée dans un plan vertical parallèle au bord latéral (5) de la billette , la seconde bobine (4) ayant une hauteur inférieure à l'écartement entre les côtés horizontaux de la première bobine, et en ce que la seconde bobine est placée entre les côtés horizontaux de la première bobine (1) de façon à coopérer avec la première bobine.

2. Appareil selon la revendication 1, **caractérisé** en ce que la ou les bobines en spirale plates et courbées (1), et la ou les bobines plates verticales (4) sont combinées pour former une structure de bobines placées dans le même intervalle entre rouleaux (7).

3. Appareil selon les revendications 2 ou 3, **caractérisé** en ce que la ou les bobines en spirale plates et courbées (1) et la ou les bobines plates verticales sont alimentées par des sources d'alimentation différentes, pour permettre une variation individuelle de l'intensité de champ et/ou de la fréquence, par exemple.

4. Appareil selon l'une quelconque des revendications précédentes, **caractérisé** en ce que la ou les bobines en spirale plates et courbées (1) ont une forme telle que la région la plus extérieure des bords passe devant une plus grande partie de la bobine que des régions situées plus loin des bords, et que les bobines entourent les bords sur trois côtés.
